Europäisches Patentamt

European Patent Office

Office européen des brevets

(11) Veröffentlichungsnummer: **0 355 686**

**A1**

# EUROPÄISCHE PATENTANMELDUNG

(21) Anmeldenummer: 89115086.4

(22) Anmeldetag: 16.08.89

(51) Int. Cl.⁴: **B65D 81/04 , B32B 5/16**

(30) Priorität: 19.08.88 DE 3828174
19.08.88 DE 8810492 U
01.04.89 DE 3910655
01.04.89 DE 8904038 U

(43) Veröffentlichungstag der Anmeldung:
28.02.90 Patentblatt 90/09

(84) Benannte Vertragsstaaten:
**DE ES FR GB IT NL SE**

(71) Anmelder: **Folien- und Filzwarenfabrik GmbH**
**Haus Nr. 34**
**D-5581 Rödelhausen(DE)**

(72) Erfinder: **Bloser, Wolfgang**
**Im Birkenrech 34**
**D-5581 Rödelhausen(DE)**

(74) Vertreter: **Hentschel, Peter, Dipl.-Ing.**
**Hohenzollernstrasse 21**
**D-5400 Koblenz(DE)**

(54) **Distanzklotz.**

(57) Die Erfindung betrifft einen Distanzklotz (1) mit einem quaderförmigen Mittelstück (2), das auf der einen Flachseite eine Kaschierung (3), beispielsweise aus Filz, trägt und auf der anderen Flachseite (2d) einen reaktivierbaren Klebstoff in Form eines Rastermusters (5a bzw. 5b) hat, der entweder unmittelbar, d.h. trägerlos, auf die Flachseite (2d) des Mittelstückes (2) oder außen auf ein auf der Flachseite (2d) des Mittelstückes (2) angeordnetes silikonisiertes Trägermaterial (7) aufgebracht ist. Das Klebstoff-Rastermuster (5a bzw. 5b) ist mit einem Abdeckpapier oder einer -folie (4) als weitere Kaschierung abdeckbar. Das Mittelstück (2) besteht aus einem Verbundwerkstoff mit Schaumstoff (2a), eingerissenen Stoffasern (2b) und PVC-Teilen (2c), wobei sein Ausgangsmaterial durch Polyurethan als Bindemittel gebunden ist. Nicht nur wegen seiner erhöhten Stauchhärte und verbesserten Reiß- und Scherfestigkeit, sondern auch wegen seines reaktivierbaren Klebstoffes kann der Distanzklotz (1) mehrmals verwendet werden, so daß vor allem teure Rohstoffe eingespart und Entsorgungsprobleme auf ein Mindestmaß verringert werden können.

FIG.1

## Distanzklotz

Die Erfindung betrifft einen Distanzklotz, insbesondere zum Transport von Autotür-Innenverkleidungen, mit quaderförmigem Mittelstück, das eine durch Materialwahl einstellbare Härte bzw. Stauchhärte aufweist, an wenigstens einer seiner beiden einander gegenüberliegenden Flachseiten mittels Flüssigkeits-oder Übertragungsklebers mit einer Kaschierung aus Filz, Folien, PVC, Gummi, Zellgummi, Kork, Zellpolyethylen, Plastazote oder Schaumstoff versehen ist und das wenigstens an einer Flachseite eine weitere Kaschierung mit einem Flüssigkeits- oder Übertragungskleber von wählbar starker Haftung aufweist, auf der Abdeckpapier oder -folie in ggfs. silikonisierter Ausgestaltung vorgesehen ist.

Die Erfindung betrifft ferner Verfahren zur Herstellung von Distanzklötzen der eingangs genannten Art. Distanzklötze der eingangs genannten Art werden vielseitig benötigt, und zwar sowohl zu Verpackungszwecken als auch als Puffer, wobei ein besonderes Anwendungsgebiet in der Automobilindustrie, und zwar sowohl bei der Herstellung als auch bei der Automobilzuliefer- und zubehörindustrie, gegeben ist.

Im EP 0 201 675 A2 ist bereits ein Klotz zum Distanzhalten und Stoßabsorbieren beschrieben. Dieser Klotz besteht aus einem quaderförmigen Mittelstück, daß eine durch Materialwahl einstellbare Härte bzw. Stauchhärte aufweist, an wenigstens einer seiner beiden einander gegenüberliegenden Flachseiten mittels Flüssigkeits- oder Übertragungsklebers mit einer Kaschierung aus Filz, Folie, PVC, Gummi, Zellgummi, Kork, Zellpolyethylen, Plastazote oder Schaumstoff versehen ist und das wenigstens an einer Flachseite eine weitere Kaschierung mit einem Flüssigkeits- oder Übertragungskleber von wählbar starker Haftung aufweist, auf der Abdeckpapier oder -folien in ggfs. silikonisierter Ausgestaltung lösbar vorgesehen ist.

Dieser Klotz zum Distanzhalten und Stoßabsorbieren konnte zwar ohne Änderung der Fertigungstechnik den jeweiligen Gebrauchsbedingungen angepaßt werden, indem seinem Mittelstück eine durch Materialwahl einstellbare Härte bzw. Stauchhärte vorgegeben wurde, so daß der Klotz dem jeweiligen Belastungsgrad im allgemeinen zu widerstehen vermochte, doch zeigte sich im besonderen, daß bei schwersten Bauteilen die Stauchhärte des Klotzes zum Distanzhalten nicht mehr ausreichte und als Folge davon aufwendig zu beseitigende Scheuer- und Druckstellen an dem betreffenden Bauteil auftreten. Da ferner wenigstens die eine Kaschierung auf der einen Flachseite des Klotzes außen eine Beschichtung aus Flüssigkeits- oder Übertragungskleber mit wählbar starker Haftung aufwies, war ein Abnehmen des Klotzes von dem betreffenden Bauteil nach Gebrauch in der Regel ohne Zerstörung seines Mittelstückes kaum möglich, da das stark poröse Material des Mittelstückes ausriß und eine Reaktivierung des Materials aus gleichem Grund nicht mehr stattfinden konnte. Eine Wiederverwendung von Klötzen der eingangs genannten Art war daher nicht möglich, und es entstanden außerdem Entsorgungsprobleme für die verbrauchten Klötze. Da die Ausgangsmaterialien für diesen Klotz nicht in unbegrenzter Menge zur Verfügung standen, waren die Herstellungskosten hoch.

Der Erfindung liegt daher die Aufgabe zugrunde, einen wiederverwendbaren Distanzklotz aus einem Verbundwerkstoff mit einer größeren Stauchhärte sowie verbesserter Scher- oder Reißfestigkeit vorzuschlagen, wobei an einer Flachseite des Distanzklotzes eine lösbare Kaschierung in Form eines Abdeckpapiers oder einer -folie vorgesehen und die Flachseite mit einem reaktivierbaren Klebstoff versehen sein soll. Weiterhin soll der Distanzklotz für größere Einsatzzyklen benutzbar sein, um auf diese Weise den Abfall an verbrauchten Distanzklötzen herabzusetzen.

Diese Aufgabe wird dadurch gelöst, daß das quaderförmige Mittelstück des Distanzklotzes aus einem Verbundwerkstoff besteht, dessen Ausgangsmaterial vor Verpressen durch Polyurethan als Bindemittel gebunden ist; ferner der Flüssigkeits- oder Übertragungskleber in Form eines Rastermusters auf der einen Flachseite des quaderförmigen Mittelstückes angeordnet und daß das Rastermuster mit dem Abdeckpapier oder der -folie, als weitere Kaschierung des quaderförmigen Mittelstückes dienend, abdeckbar ist.

Das erfindungsgemäße Verfahren zur Herstellung des Distanzklotzes gemäß Anspruch 1 ist in den Ansprüchen 12 bis 15 angegeben.

Die mit der Erfindung erzielten Vorteile bestehen im wesentlichen darin, daß durch die Anordnung des Flüssigkeits- oder Übertragungsklebers in Form eines Rastermusters auf der einen Flachseite des quaderförmigen Mittelstückes der Distanzklotz nach Gebrauch durch leichtes Abkippen vom Bauteil wieder verwendbar ist, da der Verbundwerkstoff wegen seines hohen Faseranteils nicht ausreißt und eine noch näher zu erläuternde Reaktivierung beim benutzten Klebstoff stattfinden kann. Durch Verpressen des Ausgangsmaterials für den Verbundwerkstoff auf ein Raumgewicht, das höher ist als üblich, z.B. 450 bis 500 kg/m$^3$ kann überdies eine größere Stauchhärte gegenüber dem bekannten Klotz erreicht werden, so daß mit mehreren Distanzklötzen erforderliche Abstände zwischen den zu transportierenden oder lagernden Bauteilen eingehalten und damit aufwendig zu beseitigende Scheuer-, Glanz- oder Druckstellen vermeidbar sind. Dadurch, daß in den Verbundwerkstoff vor seinem Verpressen neben PVC-Teilen auch noch eingerissene Stoffasern eingearbeitet sind, wird auch seine Scheroder Reißfestigkeit beträchtlich erhöht, so daß die Haltbarkeit des Klotzes wesentlich verbessert wird. Dadurch, daß der erfindungsgemäße Klotz wegen seines trägerlosen, reaktivierbaren Klebstoffes auf der einen Flachseite des quaderförmigen Mittelstückes durch leichtes Abkippen vom betreffenden Bauteil wieder verwendbar ist, ist der Abfall an verbrauchten Distanzklötzen auf ein Mindestmaß beschränkt. Dies ist auch deshalb besonders günstig, weil die Ausgangsmaterialien für den Distanzklotz nicht in unbegrenzter Menge zur Verfügung stehen und somit Herstellungskosten wegen teurer Rohstoffe eingespart werden können.

Diese Ausführungsform kann wegen seiner höheren Scher-und Reißfestigkeit und wegen Verwendung eines trägerlosen, reaktivierbaren Flüssigkeits- oder Übertragungsklebers auf der einen Flachseite des quaderförmigen Mittelstückes öfters, d.h. bis zu max. drei Einsatzzyklen, verwendet werden.

Gemäß einer vorteilhaften Weiterbildung des erfindungsgemäßen Distanzklotzes ist gemäß Anspruch 2 vorgesehen, daß das quaderförmige Mittelstück auf der einen Flachseite ein Trägermaterial aufweist, welches auf einer Innenseite einen Kleber zum Befestigen des Trägermaterials auf dem Verbundwerkstoff des quaderförmigen Mittelstückes trägt und auf einer Außenseite mit dem trägerlosen, reaktivierbaren Flüssigkeits- oder Übertragungskleber versehen ist, der mit dem Abdeckpapier oder der -folie als weitere Kaschierung des quaderförmigen Mittelstückes dienend, geschützt ist.

Die mit der Weiterbildung der Erfindung gemäß Anspruch 2 erzielten Vorteile bestehen im wesentlichen darin, daß durch Verwendung eines Trägermaterials, das silikonisierbar sein kann und welches auf einer Innenseite einen Kleber zum Befestigen des Trägermaterials auf dem Verbundwerkstoff des quaderförmigen Mittelstückes trägt und auf einer Außenseite mit dem trägerlosen, reaktivierbaren Flüssigkeits- oder Übertragungskleber versehen ist, welcher mit dem Abdeckpapier oder der -folie als weitere Kaschierung des quaderförmigen Mittelstückes dienend, geschützt ist, der erfindungsgemäße Distanzklotz mehrere Male ohne Beschädigung seines Verbundwerkstoffes leicht von einer Oberfläche eines zu transportierenden Gegenstandes wieder abgezogen und dadurch wertvoller Werkstoff eingespart werden kann. Dies wird dadurch möglich, daß bevorzugt die Außenseite des Trägermaterials, auf dem der trägerlose, reaktivierbare Flüssigkeits- oder Übertragungskleber in Form eines Raster- oder Parallelmusters angeordnet ist, eine Schicht von Silikonöl aufweist, das als Trennmittel zwischen dem Flüssigkeits- oder Übertragungskleber und dem Abdeckpapier oder der -folie dient. Da die Oberfläche des Distanzklotzes aufgrund seiner besonderen Ausgestaltung sehr glatt ist, bleiben die Abdrücke des Raster- oder Parallelmusters auf der Oberfläche des zu transportierenden Gegenstandes zurück. Es entsteht somit keine feste Verbindung zwischen dem Distanzklotz-Verbundwerkstoff und der Oberfläche des zu transportierenden Gegenstandes, so daß der Distanzklotz wieder leicht vom transportierten Bauteil abgenommen und nach Aufbringen neuer Kleberstellen erneut verwendet werden kann. Mit dem erfindungsgemäßen Distanzklotz können so bis zu sieben Einsatzzyklen durchgeführt werden, was eine erhebliche Verbesserung seiner Haltbarkeit gegenüber dem bekannten Distanzklotz ist, so daß, wie bereits ausgeführt, wertvoller Werkstoff eingespart werden kann.

Einer Ausführungsform der Erfindung gemäß der Weiterbildung nach Anspruch 2 zufolge besteht das silikonisierbare Trägermaterial beispielsweise aus Polyethylen (PE), Polyvinylchlorid (PVC), Schaumstoff, Verbundschaumstoff, Vlies oder Papier und ist lagig oder folienartig ausgebildet. (Anspruch 6)

Das Trägermaterial kann in Abwandlung der Erfindung sowohl auf der Innen- als auch auf der Außenseite eine Schicht von Silikonöl aufweisen. (Anspruch 7) Hierdurch wird erreicht, daß sich das Silikonöl als Trennmittel zwischen dem trägerlosen, raktivierbaren Flüssigkeit-oder Übertragungskleber und dem lagig oder folienartig ausgebildeten Trägermaterial betätigt, welches dadurch kleberabstoßend wird. Bei Aufkleben des Distanzklotzes z.B. auf eine Innenseite einer z.B. aus Preßpappe bestehenden Autotür-Innenverkleidung bedeutet dies, daß sich dieser Kleber den leichtesten Weg sucht, sich also dort niederschlägt, wo er den besten Haftgrund hat, also hier auf der Oberfläche der Autotür-Innenverkleidung, wo er sich an dieser Fläche verankert.

In weiterer Abwandlung der Erfindung kann der trägerlose, reaktivierbare Flüssigkeits- oder Übertragungskleber als Raster- oder Parallelmuster auf der Außenseite des Trägermaterials vorgesehen sein. (Anspruch 9) Da sich, wie zuvor erläutert, der Kleber in Form des Raster- oder Parallelmusters auf der Oberfläche des zu transportierenden Gegenstandes verankert, bleiben beim Abziehen des Distanzklotzes die Abdrücke des Flüssigkeits- oder Übertragungsklebers auf dieser Fläche zurück, da die Oberfläche des Distanzklotzes dank der zuvor beschriebenen Ausgestaltung sehr glatt ist. Hierdurch läßt sich der Distanzhalter leicht von dem zu transportierenden Gegenstand abnehmen, ohne daß dabei Verbundwerkstoff aus dem quaderförmigen Mittelstück des Distanzklotzes herausgerissen wird. Auf diese Weise ist ohne weiteres ein größerer Einsatzzyklus als bisher und damit eine Einsparung an wertvollem Werkstoff möglich.

Eine Ausgestaltung der Erfindung sieht vor, daß bevorzugt die mit dem Raster- oder Parallelmuster versehene Außenseite des Trägermaterials eine Schicht von Silikonöl trägt. (Anspruch 10) Diese Silikonisierung führt, wie bereits zuvor zum Teil schon erklärt, dazu, daß der Flüssigkeits- oder Übertragungskleber keine feste Verbindung zwischen dem Distanzklotz-Verbundwerkstoff und der Oberfläche des zu transportierenden Gegenstandes schafft, so daß unter Schonung dieses Verbundwerkstoffes der Distanzklotz wieder leicht von der Oberfläche der Autotür-Innenverkleidung abgezogen und nach Aufbringen neuer Kleberstellen erneut eingesetzt werden kann.

Das erfindungsgemäße Verfahren zur Herstellung der Weiterbildung des Distanzklotzes gemäß Anspruch 2 erfolgt gemäß den in Anspruch 16 angegebenen Verfahrensschritten.

Die Erfindung ist anhand mehrerer Ausführungsbeispiele schematisch in den Zeichnungen dargestellt. Es zeigt:

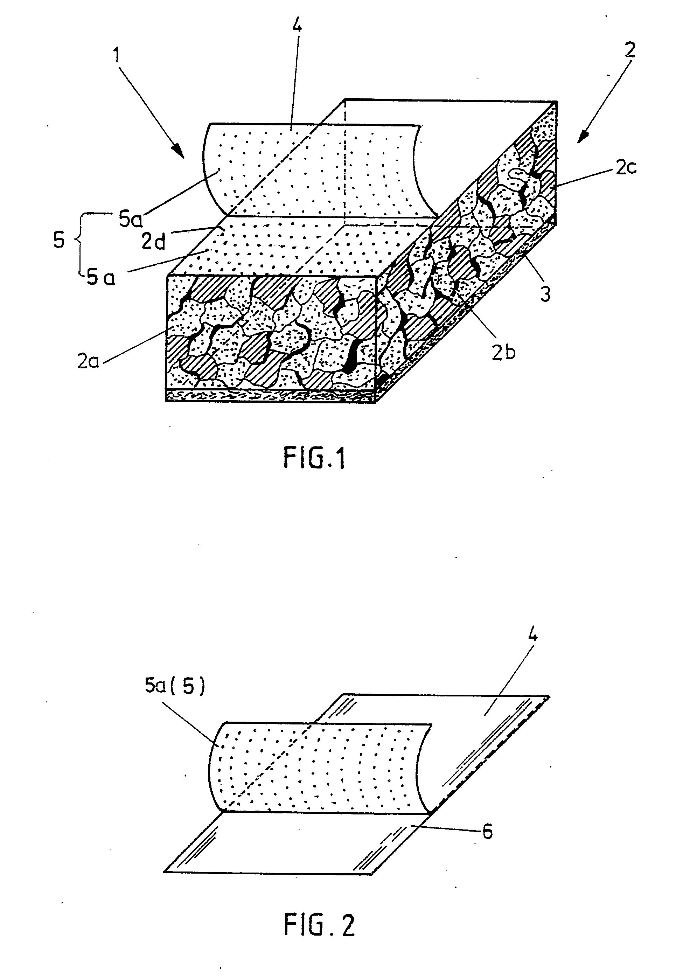

Fig. 1 - eine perspektivische Ansicht des erfindungsgemäßen Distanzklotzes gemäß Anspruch 1 mit teilweise abgezogenem Abdeckpapier oder abgezogener -folie und trägerlosem Klebstoff in Form eines Rastermusters auf der einen Flachseite des quaderförmigen Mittelstückes,

Fig. 2 - eine perspektivische Ansicht der weiteren Kaschierung, mit Hilfe deren das Aufbringen des trägerlosen Klebstoffes auf das quaderförmige Mittelstück möglich ist, mit teilweise abgezogenem Abdeckpapier oder abgezogener -folie und Rastermuster des trägerlosen Klebstoffes an der Unterseite des Abdeckpapiers sowie mit Schutzblatt für das Rastermuster des Klebstoffes,

Fig. - 3 eine pespektivische, schematische Ansicht der Weiterbildung des erfindungsgemäßen Distanzklotzes gemäß Anspruch 2, mit teilweise abgezogenem Abdeckpapier oder abgezogener -folie und trägerlosem reaktivierbarem Flüssigkeits- oder Übertragungskleber, der auf einer Außenseite eines Trägermaterials als Rastermuster vorgesehen ist, wobei das Trägermaterial mittels eines geeigneten Klebers auf der einen Flachseite des Verbundwerkstoffes befestigt ist,

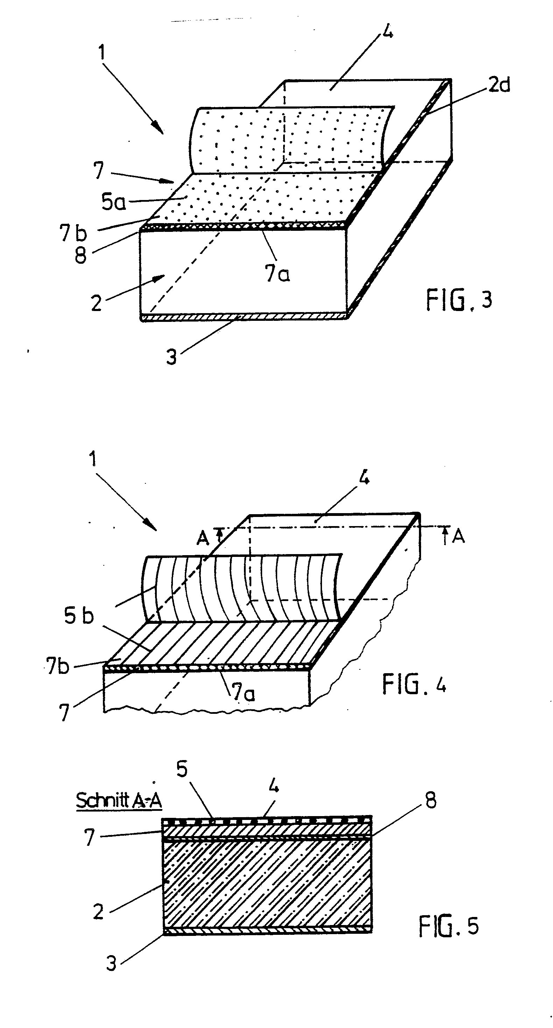

Fig. 4 - eine weitere perspektivische Ansicht, wie in Fig. 3, jedoch mit weggebrochenem, quaderförmigen Mittelstück und dem trägerlosen, reaktivierbaren Flüssigkeits-oder Übertragungskleber, der in weiterer Ausführung der Erfindung als Parallelmuster auf dieser Seite angeordnet ist und

Fig. 5 - eine Schnittansicht längs der Linie A-A in Fig. 4 durch die erfindungsgemäße Distanzklotzweiterbildung gem. Fig. 3 mit dem lagig oder folienartig ausgebildeten Trägermaterial, das an der Innenseite mit einem Kleber auf der einen Flachseite des quaderförmigen Mittelstückes befestigt ist und vor Gebrauch durch das Abdeckpapier oder die -folie geschützt ist.

Die Figuren 1 und 2 zeigen perspektivische Ansichten einer ersten Ausführungsform des erfindungsgemäßen Distanzklotzes 1 mit quaderförmigem Mittelstück 2, das sich aus einem Verbundwerkstoff aufbaut, wobei dessen Ausgangsmaterial vor dem Verpressen durch Polyurethan als Bindemittel gebunden ist. Das Polyurethan setzt sich aus einer Mischung von isomeren Formen von 2,4-Toluylendiisocyanat und 2,6-Toluylendiisocyanat im Verhältnis 68:32 sowie von verzweigtem, ethylenoxid-modifiziertem Polyetherpolyol mit erhöhter Aktivität zusammen. Der Verbundwerkstoff besteht aus Schaumstoff 2a mit bis zu 75 Gew.-% eingerissenen Stoffasern 2b, PVC-Teilen 2c aus Recyclingmaterial, wobei das aus Polyurethan bestehende Bindemittel im Ausgangsmaterial für den Verbundwerkstoff 12 Gew.-% ausmacht.

Zur Erzielung einer größeren Stauchhärte kann das Ausgangsmaterial von einem an sich bekannten Raumgewicht eines Verbundschaumes von 250 bis 350 kg/m$^3$in vorteilhafter Weise auf ein Raumgewicht von bspw. 450 bis 500 kg/m$^3$ für den erfindungsgemäß ausgebildeten Distanzklotz verdichtet werden. Mit diesem höheren Raumgewicht wird erreicht, daß der erfindungsgemäß ausgebildete Distanzklotz erforderliche Abstände auch bei schwersten Bauteilen bei Transport oder Lagerung zu wahren vermag, so daß insbesondere bei Autotür-Innenverkleidungen aufwendig zu beseitigende Scheuer-, Glanz- und Druckstellen kaum noch auftreten können. Die Einlagerung von Stoffasern 2b in den Verbundwerkstoff hat den großen Vorteil, daß die Scheroder Reißfestigkeit desselben erhöht wird, so daß sich die Distanzklötze wieder leicht von den betreffenden Bauteilen entfernen lassen, ohne daß die Distanzklötze auseinanderpreschen. Die Klebstoffanordnung in Form eines Rastermusters ermöglicht, wie bereits ausgeführt, ein leichtes Abkippen von den betreffenden Bauteilen.

Wie die perspektivische Darstellung der Fig. 1 ferner zeigt, ist beim erfindungsgemäßen Distanzklotz 1 an wenigstens einer seiner beiden einander gegenüberliegenden Flachseiten mittels Flüssigkeitsoder Übertragungsklebers eine Kaschierung 3 in bekannter Weise vorgesehen. Die Kaschierung 3 kann beispielsweise aus Filz, Folie, PVC, Gummi, Zellgummi, Kork, Zellpolyethylen, Plastozote oder Schaumstoff bestehen, um Kratzer- oder Scheuerstellen an zu transportierenden oder lagernden Bauteilen zu vermeiden.

Auf der anderen Flachseite 2d des quaderförmigen Mittelstückes 2 ist der Flüssigkeits- oder Übertragungskleber 5 in Form eines Rastermusters 5a angeordnet, welches mit dem Abdeckpapier oder der -folie 4, als weitere Kaschierung des quaderförmigen Mittelstückes 2 und im wesentlichen als Schutz bei Transport und Lagerung dienend, abdeckbar ist. Der Flüssigkeits- oder Übertragungskleber 5 ist ein trägerloser, reaktivierbarer Klebstoff und besteht aus einer Acryldispersion mit Zusätzen von niederen Kohlenwasserstoffen (Benzin).

Der als Rastermuster auf der einen Flachseite 2d des quaderförmigen Mittelstückes 2 angeordnete, trägerlose Klebstoff 5 nimmt eine effektive Klebstofffläche von 40% ein, wobei der Klebstoffauftrag gemäß dem Ausführungsbeispiel in vorteilhafter Weise etwa 45-55 g/m² beträgt. Dadurch, daß der trägerlose, reaktivierbare Klebstoff 5 in Form eines Rastermusters 5a auf die betreffende Flachseite 2d des quaderförmigen Mittelstückes 2 auftragbar ist, wird, wie bereits angedeutet, der besondere Vorteil erreicht, daß die Distanzklötze durch leichtes Abkippen vom betreffenden Bauteil wieder verwendbar sind und nicht als Abfall der Umwelt zur Last fallen. Dies ist auch deshalb besonders günstig, weil die Ausgangsmaterialien für den Distanzklotz nicht in unbegrenzter Menge zur Verfügung stehen und somit Herstellungskosten wegen teurer Rohstoffe eingespart werden.

Die Fig. 2 zeigt in einer weiteren perspektivischen Ansicht die weitere Kaschierung für das quaderförmige Mittelstück 2 mit teilweise abgezogenem Abdeckpapier oder abgezogener -folie 4 und Rastermuster 5a des trägerlosen, reaktivierbaren Klebstoffes 5 an der Unterseite des Abdeckpapiers oder der -folie 4 sowie mit Schutzblatt 6 für das Rastermuster 5a des trägerlosen Klebstoffes. Nach Abnehmen des Schutzblattes 6 vom Abdeckpapier 4 kann das Abdeckpapier oder die -folie 4 mit dem an seiner Unterseite vorgesehenen Rastermuster 5a auf die eine Flachseite 2d des quaderförmigen Mittelstückes 2 gelegt werden.

Das erfindungsgemäße Verfahren zur Herstellung des Distanzklotzes 1 gemäß der in Fig. 1 und 2 dargestellten Ausführungsform besteht darin, daß der Verbundwerkstoff zur Erzielung einer größeren Stauchhärte sowie einer verbesserten Scher- oder Reißfestigkeit aus einem Ausgangsmaterial, bestehend aus Schaumstoff mit bis zu 75 Gew.-% eingerissenen Stoffasern 2b und PVC-Teilen 2c aus Recyclingmaterial und einem Polyurethan-Bindemittelanteil von 12 Gew.-%, auf ein höheres Raumgewicht als üblich, bspw. von 450 bis 500 kg/m³, verdichtet, dann der Flüssigkeits- oder Übertragungskleber als trägerloser, reaktivierbarer Klebstoff auf die freie Flachseite des quaderförmigen Mittelstückes in Rasterform aufgebracht, durch Reib- oder Hitzeeinfluß erwärmt und dann mit einem Stanzdruck von etwa 15-20 t in die Poren des Verbundwerkstoffes hineingeschossen wird. Danach wird dem erfindungsgemäßen Verfahren zufolge das Abdeckpapier oder die -folie auf das Rastermuster des trägerlosen Klebstoffes zur Bildung der weiteren Kaschierung gelegt und vor Ansetzen des Distanzklotzes auf ein Bauteil wieder abgezogen.

Das erfindungsgemäße Verfahren zur Herstellung des Distanzklotzes kann auch so durchgeführt werden, daß das die weitere Kaschierung bildende Abdeckpapier oder die -folie 4 an der Unterseite mit dem trägerlosen, reaktivierbaren Klebstoff 5 in Form eines Rastermusters 5a versehen und darauf ein Schutzblatt 6 in gleichem Format wie das Abdeckpapier oder die -folie 4 gelegt wird.

In einem weiteren Verfahrensschritt wird das Schutzblatt 6 vom Abdeckpapier oder der -folie 4 abgezogen und das Abdeckpapier oder die -folie 4 mit dem trägerlosen Klebstoff auf die eine Flachseite 2d des quaderförmigen Mittelstückes 2 des Distanzklotzes 1 gelegt. Danach wird der trägerlose Klebstoff vom Abdeckpapier oder von der -folie 4 auf die Flachseite 2d des quaderförmigen Mittelstückes 2 aufgebracht, der trägerlose Klebstoff 5 durch Ausüben von Reibung oder Hitze erwärmt und dann mit einem Stanzdruck von etwa 10-20 t in die Poren des Verbundwerkstoffes hineingedrückt.

Die Figuren 3 bis 5 zeigen die Weiterbildung des erfindungsgemäßen Distanzklotzes gemäß Anspruch 2.

Fig. 3 zeigt eine perspektivische, schematische Ansicht des erfindungsgemäßen Distanzklotzes 1 mit quaderförmigem Mittelstück 2, das sich aus einem bekannten Verbundwerkstoff aufbaut und an einer seiner beiden einander gegenüberliegenden Flachseiten eine übliche Kaschierung 3, beispielsweise aus Filz, aufweist, welche mittels eines Flüssigkeits- oder Übertragungsklebers an der Flachseite befestigt ist und dazu dient, Kratzer- oder Scheuerstellen an zu transportierenden oder lagernden Bauteilen zu vermeiden.

Auf der anderen Flachseite 2d des quaderförmigen Mittelstückes 2 ist ein silikonisierbares Trägermaterial 7 vorgesehen, welches, wie noch zu erläutern ist, auf einer Innenseite 7a (Fig.2) einen Kleber 8 zur Herstellung einer ganzflächigen Verbindung und zum Befestigen des Trägermaterials auf dem Verbundwerkstoff des quaderförmigen Mittelstückes 2 trägt und silikonisierbar sein kann. Das Trägermaterial 7 besteht beispielsweise aus Polyethylen (PE), Polyvinylchlorid (PVC), Schaumstoff, Verbundschaumstoff, Vlies oder Papier und ist lagig oder folienartig ausgebildet.

Eine Außenseite 7b des Trägermaterials 7 ist mit einem reaktivierbaren Flüssigkeits- oder Übertragungskleber 5 (Fig. 3) versehen, der sich aus einer Acryldispersion mit Zusätzen von niederen Kohlwasserstoffen (Benzin) zusammensetzt und in Form eines Rastermusters 5a auf der Außenseite 7b des silikonisierbaren silikonisierbaren Trägermaterials 7 angeordnet sein kann.

Die das Rastermuster 5a tragende Außenseite 7b des Trägermaterials ist bevorzugt mit einer Schicht von Silikonöl versehen. Das auf die Außenseite 7b des Trägermateriales 7 aufgetragene Silikonöl wirkt als Trennmittel zwischen dem als Rastermuster 5a aufgetragenen, trägerlosen, reaktivierbaren Flüssigkeits- oder Übertragungskleber 5 und dem Abdeckpapier oder der -folie 4, die als weitere Kaschierung des quaderförmigen Mittelstückes 2 dient und vor Ansetzen des erfindungsgemäßen Distanzklotzes an eine Oberfläche eines zu transportierenden oder lagernden Bauteils, beispielsweise an einer Oberfläche einer Autotür-Innenverkleidung, leicht abziehbar ist.

Mit dieser Maßnahme wird das Abdeckpapier oder die -folie 4 kleberabstoßend. Wenn beispielsweise der erfindungsgemäße Distanzklotz 1 auf die Innenseite einer aus Preßpappe bestehenden Autotür-Innenverkleidung aufgeklebt wird, hat der Flüssigkeits- oder Übertragungskleber 5 das Bestreben, sich den leichtesten Weg zu suchen und sich dort niederzuschlagen, wo er den besten Haftgrund hat. Dies stellt hier zweifellos die Oberfläche der zu transportierenden Autotür-Innenverkleidung dar.

Der als Rastermuster 5a angeordnete Flüssigkeits- oder Übertragungskleber 5 verankert sich also mit dieser Oberfläche. Beim Abziehen des Distanzklotzes 1 bleiben hierbei die Stellen des Rastermusters 5a auf der Oberfläche des zu transportierenden Gegenstandes zurück, da die Oberfläche des Distanzklotzes 1 wegen seiner besonderen Ausgestaltung sehr glatt ist. Der Distanzklotz 1 läßt sich daher leicht und ohne Abbrechen von Verbundwerkstoff aus dem quaderförmigen Mittelstück 2 wieder verwenden.

Damit wird deutlich, daß der Flüssigkeits- oder Übertragungskleber 5, der als Rastermuster 5a auf die Außenseite 7b des Trägermaterials 7 aufgetragen ist, keine feste Verbindung des Trägermaterials 7 bzw. des Verbundwerkstoffes mit der Oberfläche des zu transportierenden Bauteiles bewirkt. Das Trägermaterial 7 bzw. der Verbundwerkstoff des quaderförmigen Mittelstückes 2 wird daher geschont. Der erfindungsgemäße Distanzklotz 1 kann also leicht von der Oberfläche der hier beschriebenen Autotür-Innenverkleidung abgenommen und nach Aufbringen eines neuen Flüssigkeit- oder Übertragungsklebers 5, beispielsweise in Form des Rastermusters 5a, erneut verwendet werden. Nur dann, wenn der Verbundwerkstoff des quaderförmigen Mittelstückes 2 verschmutzt oder verschlissen ist, muß ein neuer Distanzklotz 1 benutzt werden.

Die Fig. 4 zeigt, ebenfalls in einer perspektivischen Ansicht, wie die Fig. 3, eine weitere Ausführungsform der Weiterbildung des erfindungsgemäßen Distanzklotzes 1 gemäß Anspruch 2 mit Trägermaterial für den Klebstoff, bei welcher der auf die Außenseite 7b des Trägermaterials 7 aufgetragene Flüssigkeits- oder Übertragungskleber 5 in Form eines Parallelmusters 5b vorgesehen ist. Auch bei dieser Ausgestaltung der Erfindung ist das Trägermaterial 7 zumindest einseitig, d.h. auf der Außenseite 7b mit Silikonöl beschichtbar.

Der als Raster- 5a oder Parallelmuster 5b auf der Außenseite 7b des Trägermaterials 7 angeordnete Flüssigkeits- oder Übertragungskleber 7 nimmt eine effektive Klebstofffläche von etwa 40-70% ein, wobei der Klebstoffautrag gemäß dem beschriebenen Ausführungsbeispiel etwa 45-55 g/m² beträgt. Dadurch, daß zumindest die Außenseite 7b des Trägermarails 7 mit Silikonöl versehen ist, wird, wie zuvor schon im einzelnen beschrieben, auch bei dieser Ausbildung der Erfindung der besondere Vorteil erreicht, daß die Distanzklötze 1 leicht vom zu transportierenden Gegenstand wieder abgenommen werden können, ohne daß hierbei Material aus den Distanzklötzen herausgerissen wird. Dies ist darauf zurückzuführen, daß der Flüssigkeits- oder Übertragungskleber 5 auch in Form des Parallelmusters 5b keine feste Verbindung zwischen dem Verbundwerkstoff des Distanzklotzes 1 und der Oberfläche des zu transportierenden Gegenstandes eingeht. Der Verbundwerkstoff wird also geschont, so daß der Distanzklotz 1 mehrmals verwendbar ist und nicht als Abfall die Umwelt belastet. Dies ist auch deshalb besonders günstig, weil die Ausgangsmaterialien für den Distanzklotz 1 nicht in unbegrenzter Menge zur Verfügung stehen und somit Herstellungskosten wegen teuere Rohstoffe eingespart werden können.

Eine Schnittansicht längs der Linie A-A (Fig. 4) zeigt die Fig. 5. Während das lagig oder folienartig ausgebildete, Trägermaterial 7 an der Innenseite 7a mit dem Kleber 8 auf der einen Flachseite 2d des Verbundwerkstoffes befestigt ist, trägt es an seiner Außenseite 7b den trägerlosen, reaktivierabren Flüssigkeits- oder Übertragungskleber 5, der, wie beschrieben, als Raster- 5a oder Parallelmuster 5b ausgebildet sein kann und vor Gebrauch durch das Abdeckpapier oder die -folie 4 geschützt ist.

Das erfindungsgemäße Verfahren zur Herstellung des in den Fig. 3 bis 5 dargestellten Distanzklotzes 1 besteht darin, daß der Kleber 8 unter Reib- oder Hitzeeinfluß auf die eine Flachseite 2d des aus dem Verbundwerkstoff gefertigten quaderförmigen Mittelstückes 2 aufgebracht wird; der Kleber 8 mit einem Stanzdruck von etwa 15-20 t in Poren des Verbundwerkstoffes hineingeschossen wird; das Trägermaterial 8 mit einer Schicht von Silikonöl versehen wird; das Trägermaterial 7 mit seiner Innenseite 7a auf den Kleber 8 zur Schaffung einer ganzflächigen Verbindung aufgeklebt wird; auf die Außenseite 7b des Trägermaterials 7 der trägerlose, reaktivierbare Flüssigkeits- oder Übertragungskleber 5 als Raster-oder Parallelmuster 5a bzw. 5b aufgetragen wird; die Außenseite b des Trägermaterials 7 mit Silikonöl versehen wird und daß das Abdeckpapier oder die -folie 4 auf das Raster- oder Parallelmuster 5a bzw. 5b des trägerlosen, reaktivierbaren Flüssigkeitoder Übertragungsklebers 5 zur Bildung der weiteren Kaschierung gelegt und vor Ansetzen des Distanzklotzes an ein zu transportierendes oder zu lagerndes Bauteil, beispielsweise an eine Oberfläche einer Autotür-Innenverkleidung, wieder abgezogen wird.

Abweichend von den Zeichnungen kann der Distanzklotz 1 nicht nur einzeln, sondern auch in großer Stückzahl auf einem gemeinsamen großen Abdeckpapier oder einer -folie angeordnet und so gelagert oder transportiert werden. Statt einer quaderförmigen Ausgestaltung kann der erfindungsgemäße Distanzklotz 1 auch eine andere Umrißform aufweisen, beispielsweise die einer runden Scheibe oder eines Vielecks. Anstelle eines silikonisierten oder silikonisierbaren Trägermaterials kann in vorteilhafter Weise auch ein nicht silikonisiertes oder silikonisierbares Trägermaterial für den Kleber verwendet werden.

Alle in den Zeichnungen und/oder Beschreibung dargestellten Einzel- und Kombinationsmerkmale werden als erfindungswesentlich angesehen.

## Ansprüche

1. Distanzklotz, insbesondere zum Transport von Autotür-Innenverkleidungen, mit quaderförmigem Mittelstück, das eine durch Materialwahl einstellbare Härte bzw. Stauchhärte aufweist, an wenigstens einer seiner beiden einander gegenüberliegenden Flachseiten mittels Flüssigkeits- oder Übertragungsklebers mit einer Kaschierung aus Filz, Folie, PVC, Gummi, Zellgummi, Kork, Zellpolyethylen, Plastazote oder Schaumstoff versehen ist und das wenigstens an einer Flachseite eine weitere Kaschierung mit einem Flüssigkeits- oder Übertragungskleber von wählbar starker Haftung aufweist, auf der Abdeckpapier oder -folie in ggfs. silikonisierter Ausgestaltung vorgesehen ist, dadurch gekennzeichnet, daß das quaderförmige Mittelstück (2) des Distanzklotzes (1) aus einem Verbundwerkstoff besteht, dessen Ausgangsmaterial vor Verpressen durch Polyurethan als Bindemittel gebunden ist; der Flüssigkeits- oder Übertragungskleber (5) als Rastermuster (5a) auf der einen Flachseite des quaderförmigen Mittelstückes (2) angeordnet und daß das Rastermuster (5a) mit dem Abdeckpapier oder der -folie (4), als weitere Kaschierung des quaderförmigen Mittelstückes (2) dienend, abdeckbar ist.

2. Distanzklotz, nach Anspruch 1 dadurch gekennzeichnet, daß das quaderförmige Mittelstück (2) auf der einen Flachseite (2d) ein Trägermaterial (7) aufweist, welches auf einer Innenseite (7a) einen Kleber (8) zum Befestigen des Trägermaterials (7) auf dem Verbundwerkstoff des quaderförmigen Mittelstückes (2) trägt und auf einer Außenseite (7b) mit dem trägerlosen, reaktivierbaren Flüssigkeits- oder Übertragungskleber (5) versehen ist, der mit dem Abdeckpapier oder der -folie (4) als weitere Kaschierung des quaderförmigen Mittelstückes (2) dienend, geschützt ist.

3. Distanzklotz nach den Ansprüchen 1 und 2, dadurch gekennzeichnet, daß sich der Verbundwerkstoff des quaderförmigen Mittelstückes (2) aus Schaumstoff (2a) mit bis zu 75 Gew.-% eingerissenen Stoffasern (2b) und PVC-Teilen (2c) aus Recyclingmaterial zusammensetzt, wobei das aus Polyurethan bestehende Bindemittel 12 Gew.-% ausmacht.

4. Distanzklotz nach den Ansprüchen 2 und 3, dadurch gekennzeichnet, daß sich das Polyurethan aus einer Mischung von isomeren Formen von 2,4-Toluylendiisocyanat und 2,6-Toluylendiisocyanat im Verhältnis 68:32 sowie von verzweigtem, ethylenoxid-modifiziertem Polyetherpolyol mit erhöhter Aktivität zusammensetzt.

5. Distanzklotz nach den Ansprüchen 1 und 2, dadurch gekennzeichnet, daß der Flüssigkeits- oder Übertragungskleber ein trägerloser, reaktivierbarer Klebstoff ist und aus modifizierter Acryldispersion mit Zusätzen von niederen Kohlenwasserstoffen (Benzin) besteht.

6. Distanzklotz nach Anspruch 2, dadurch gekennzeichnet, daß das Trägermaterial (7) beispielsweise aus Polyethylen (PE), Polyvinylchlorid (PVC), Schaumstoff, Verbundschaumstoff, Vlies oder Papier besteht und lagig oder folienartig ausgebildet ist.

7. Distanzklotz nach den Ansprüchen 2 und 6, dadurch gekennzeichnet, daß das Trägermaterial (7) auf der Innenseite (7a) und auf der Außenseite (7b) eine Schicht von Silikonöl aufweist.

8. Distanzklotz nach den Ansprüchen 1 und 5, dadurch gekennzeichnet, daß der als Rastermuster (5a) auf der einen Flachseite (2d) des quaderförmigen Mittelstückes (2) angeordnete trägerlose Klebstoff (5) eine effektive Klebstoffläche von 40% einnimmt.

9. Distanzklotz nach Anspruch 2, dadurch gekennzeichnet, daß der trägerlose, reaktivierbare Flüssigkeits- oder Übertragungskleber (5) als Raster- (5a) oder Parallelmuster (5b) auf der Außenseite /7b) des Trägermaterials (7) vorgesehen ist.

10. Distanzklotz nach Anspruch 2,
dadurch gekennzeichnet,
daß die bevorzugt mit dem Raster- (5a) oder Parallelmuster (5b) versehene Außenseite (7b) des Trägermaterials (7) eine Schicht von Silikonöl aufweist.

11. Verfahren zur Herstellung des Distanzklotzes nach Anspruch 1,
dadurch gekennzeichnet,
daß der Verbundwerkstoff aus einem Ausgangsmaterial mit der Zusammensetzung nach Anspruch 2 hergestellt ist und daß der Flüssigkeits- oder Übertragungskleber als trägerloser, reaktivierbarer Klebstoff als Rastermuster auf die eine Flachseite des quaderförmigen Mittelstückes aufgebracht, durch Reiboder Hitzeeinfluß erwärmt und dann mit einem Stanzdruck von etwa 15-20 t in Poren des Verbundwerkstoffes hineingeschossen wird.

12. Verfahren nach Anspruch 11,
dadurch gekennzeichnet,
daß das Abdeckpapier oder die -folie auf das Rastermuster des trägerlosen, reaktivierbaren Klebers zur Bildung der weiteren Kaschierung gelegt und vor Ansetzen des Distanzklotzes an ein zu transportierendes und lagerndes Bauteil wieder abgezogen wird.

13. Verfahren zur Herstellung des Distanzklotzes nach Anspruch 1,
dadurch gekennzeichnet,
daß das die weitere Kaschierung bildende Abdeckpapier oder die -folie an der Unterseite mit dem trägerlosen, reaktivierbaren Klebstoff in Form eines Rastermusters versehen und darauf ein Schutzblatt in gleichem Format wie das Abdeckpapier oder die -folie gelegt wird.

14. Verfahren nach Anspruch 13,
dadurch gekennzeichnet,
daß das Schutzblatt vom Abdeckpapier oder von der -folie abgezogen und das Abdeckpapier oder die -folie mit dem trägerlosen Klebstoff auf die eine Flachseite des quaderförmigen Mittelstückes des Distanzklotzes gelegt wird.

15. Verfahren nach den Ansprüchen 13 und 14,
dadurch gekennzeichnet,
daß der trägerlose Klebstoff vom Abdeckpapier oder von der -folie auf die eine Flachseite des quaderförmigen Mittelstückes aufgebracht, der trägerlose Klebstoff durch Ausüben von Reibung oder Hitze erwärmt und dann mit einem Stanzdruck von etwa 15-20 t in die Poren des Verbundwerkstoffes hineingedrückt wird.

16. Verfahren zur Herstellung des Distanzklotzes nach Anspruch 2,
dadurch gekennzeichnet, daß

a) der Kleber (8) unter Reib- oder Hitzeeinfluß auf die eine Flachseite des aus dem Verbundwerkstoff gefertigten quaderförmigen Mittelstückes aufgebracht wird;

b) der Kleber (8) mit einem Stanzdruck von etwa 15-20 t in Poren des Verbundwerkstoffes hineingeschossen wird;

c) das Trägermaterial mit einer Schicht von Silikonöl versehen wird;

d) das Trägermaterial mit seiner Innenseite auf den Kleber (8) zur Schaffung einer ganzflächigen Verbindung aufgeklebt wird;

e) auf die Außenseite des Trägermaterials der trägerlose, reaktivierbare Flüssigkeits- oder Übertragungskleber als Rasteroder Parallelmuster aufgetragen wird;

f) die Außenseite des Trägermaterials mit Silikonöl versehen wird und

g) das Abdeckpapier oder die -folie auf das Raster oder Parallelmuster des trägerlosen, reaktivierbaren Flüssigkeits- oder Übertragungsklebers zur Bildung der weiteren Kaschierung gelegt und vor Ansetzen des Distanzklotzes an ein zu transportierendes oder zu lagerndes Bauteil, beispielsweise an eine Oberfläche einer Autotür-Innenverkleidung wieder abgezogen wird.

FIG.1

FIG.2

FIG. 3

FIG. 4

Schnitt A-A

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 201 675 (FOLIEN UND FILZWARENFABRIK GmbH) * Spalte 1, Zeile 1 - Spalte 4, Zeile 45; Ansprüche 1,3,4; Figur * ----- | 1-3,6,7 ,9,10, 16 | B 65 D 81/04 B 32 B 5/16 |

|  |  |  | RECHERCHIERTE SACHGEBIETE (Int. Cl.5) |
|---|---|---|---|
|  |  |  | B 65 D B 32 B |

Der vorliegende Recherchenbericht wurde für alle Patentansprüche erstellt

| Recherchenort | Abschlußdatum der Recherche | Prüfer |
|---|---|---|
| DEN HAAG | 27-09-1989 | DERZ T. |